# EUROPEAN PATENT SPECIFICATION

(11) **EP 4 455 899 B1**
(45) Date of publication and mention of the grant of the patent: **25.11.2026**
(21) Application number: 24170464.2
(22) Date of filing: 16.04.2024
(51) Int. Cl.: G06F 16/22, G06F 16/2455, G06F 16/27

(54) **DATABASE-BASED DATA SHARD PROCESSING METHOD AND APPARATUS, MEDIUM, AND ELECTRONIC DEVICE**
VERFAHREN UND VORRICHTUNG ZUR VERARBEITUNG VON DATENBANKBASIERTEN DATEN-SHARD, MEDIUM UND ELEKTRONISCHE VORRICHTUNG
PROCÉDÉ ET APPAREIL DE TRAITEMENT DE FRAGMENTS DE DONNÉES BASÉS SUR UNE BASE DE DONNÉES, SUPPORT ET DISPOSITIF ÉLECTRONIQUE

(30) Priority: 28.04.2023 CN 202310480018
(43) Date of publication of application: 30.10.2024
(73) Proprietor: Beijing Volcano Engine Technology Co., Ltd., Beijing 100190 (CN)
(72) Inventor: DENG, Yun, Beijing, 100028 (CN); HE, Lei, Beijing, 100028 (CN)
(74) Representative: Marks & Clerk LLP

(56) References cited:
- US-A- 5 664 172
- US-A1- 2004 249 845
- US-A1- 2007 078 813
- US-A1- 2011 029 557
- US-A1- 2013 110 819

## Description

### Technical Field

The present disclosure relates to the field of computer technologies, and specifically to a database-based data shard processing method and apparatus, a medium, and an electronic device.

### Background

In order to further optimize the performance of a relational database management system (MySQL) executor, a composite index may be created for a data table. In the related art, there is a problem in the MySQL composite index scenario that sharded data in the data table cannot be processed according to the index, resulting in low processing performance

US20040249845A1 provides approaches for generating execution plans for database commands that include an in-list predicate. The approaches can be used to generate execution plans that exploit the power of in-list iterators in ways and under circumstances not previously supported by conventional DBMSs. An in-list iterator may be used with execution subplans for processing multi-column in-list queries. An in-list iterator is used with execution subplans that scan function-based indexes. The execution plans for a multi-column in-list query limit table scans to only table partitions that contain data that satisfy the query.

### Summary

It is an object of the present disclosure to provides a database-based data shard processing method and apparatus, a medium, and an electronic device.

The object is achieved by the features of the respective independent claims. Further embodiments are defined in the corresponding dependent claims.

The other features and advantages of the present disclosure will be described in detail in the following section Detailed Description of Embodiments.

### Brief Description of the Drawings

The foregoing and other features, advantages, and aspects of embodiments of the present disclosure become more apparent with reference to the following specific implementations and in conjunction with the accompanying drawings. Throughout the drawings, the same or similar reference numerals denote the same or similar elements. It should be understood that the accompanying drawings are schematic and that parts and elements are not necessarily drawn to scale. In the accompanying drawings:
FIG. 1 is a flowchart of a database-based data shard processing method according to an exemplary embodiment of the present disclosure;
FIG. 2 is a block diagram of a database-based data shard processing apparatus according to an exemplary embodiment of the present disclosure; and
FIG. 3 is a schematic diagram of a structure of an electronic device according to an exemplary embodiment of the present disclosure.

### Detailed Description

Embodiments of the present disclosure are described in more detail below with reference to the accompanying drawings. Although some embodiments of the present disclosure are shown in the accompanying drawings, it should be understood that the present disclosure may be implemented in various forms and should not be construed as being limited to the embodiments set forth herein. Rather, these embodiments are provided for a more thorough and complete understanding of the present disclosure. It should be understood that the accompanying drawings and the embodiments of the present disclosure are only for exemplary purposes, and are not intended to limit the scope of protection of the present disclosure.

It should be understood that the various steps described in the method implementations of the present disclosure may be performed in different orders, and/or performed in parallel. Furthermore, additional steps may be included and/or the execution of the illustrated steps may be omitted in the method implementations. The scope of the present disclosure is not limited in this respect.

The term "include/comprise" used herein and the variations thereof are an open-ended inclusion, namely, "include/comprise but not limited to". The term "based on" is "at least partially based on". The term "an embodiment" means "at least one embodiment". The term "another embodiment" means "at least one another embodiment". The term "some embodiments" means "at least some embodiments". Related definitions of the other terms will be given in the description below.

It should be noted that concepts such as "first" and "second" mentioned in the present disclosure are only used to distinguish different apparatuses, modules, or units, and are not used to limit the sequence of functions performed by these apparatuses, modules, or units or interdependence.

It should be noted that the modifiers "one" and "a plurality of" mentioned in the present disclosure are illustrative and not restrictive, and those skilled in the art should understand that unless the context clearly indicates otherwise, the modifiers should be understood as "one or more".

The names of messages or information exchanged between a plurality of apparatuses in the implementations of the present disclosure are used for illustrative purposes only, and are not used to limit the scope of these messages or information.

It can be understood that before the use of the technical solutions disclosed in the embodiments of the present disclosure, the user shall be informed of the type, range of use, use scenarios, etc., of personal information involved in the present disclosure in an appropriate manner in accordance with the relevant laws and regulations, and the authorization of the user shall be obtained.

For example, in response to reception of an active request from a user, prompt information is sent to the user to clearly inform the user that the requested operation will require access to and use of personal information of the user. As such, the user can independently choose, based on the prompt information, whether to provide the personal information to software or hardware, such as an electronic device, an application, a server, or a storage medium, that performs the operations of the technical solutions of the present disclosure.

As an optional but non-limiting implementation, in response to the reception of the active request from the user, the prompt information may be sent to the user in the form of, for example, a pop-up window, in which the prompt information may be presented in text. In addition, the pop-up window may also include a selection control for the user to choose whether to "agree" or "disagree" to provide the personal information to the electronic device.

It can be understood that the above process of notifying and obtaining user authorization is only illustrative and does not constitute a limitation on the implementations of the present disclosure, and other manners that satisfy the relevant laws and regulations may also be applied in the implementations of the present disclosure.

Furthermore, it can be understood that the data involved in the technical solutions (including, but not limited to, the data itself, the access to or use of the data) shall comply with the requirements of corresponding laws, regulations, and relevant provisions.

In MySQL, an index consisting of two or more columns is called a composite index, or a concatenated index, or a combined index. The composite index may be represented as (*C*_{0'} *C*_{1'} ..._{'} *Cₙ*), where *Cₙ* represents an n^{th} column field.

In some cases, there is a need to process shards in a data table.

For example, there is a need to first perform logical sharding on a single MySQL table based on indexes and then concurrently perform a plurality of sharding tasks to improve performance, i.e., to refine the granularity of tasks from table into table shard.

Typical scenarios include: multi-shard concurrent migration after logical sharding to increase a migration speed in data migration of a MySQL table, or multi-shard concurrent comparison to increase a verification speed in data verification of a MySQL table, or the like.

For another example, any boundary-specified shard may be processed, and the processing includes query, delete, and other operations.

**In** a scenario where a composite index (*C*_{0'} *C*_{1'} ... *_{'} Cₙ*) is created, boundary information of an i^{th} shard *Shardᵢ* in the data table may be represented as: $\left[\left({V}_{0}^{s},{V}_{1}^{s},…,{V}_{n}^{s}\right), \left({V}_{0}^{e},{V}_{1}^{e},…,{V}_{n}^{e}\right)\right)$ where ${V}_{n}^{s}$ represents a first boundary of an n^{th} shard, which may also be referred to as a left boundary or an upper boundary, and ${V}_{n}^{e}$ represents a second boundary of the n^{th} shard, which may also be referred to as a right boundary or a lower boundary. A range of a shard may be defined by the first boundary and the second boundary of the shard. Altematively, in some implementations, it can be understood that an area between the first shard and the second shard is an area where the shard is located.

In a MySQL composite index scenario, when sharded data in the data table is processed, execution conditions need to be fully described through complex logical expressions to enable Structured Query Language (SQL) statements to be executed. For example, for a shard *Shardᵢ* with boundary information represented as $\left[\left({V}_{0}^{s},{V}_{1}^{s},…,{V}_{n}^{s}\right), \left({V}_{0}^{e},{V}_{1}^{e},…,{V}_{n}^{e}\right)\right)$ in the composite index (*C*_{0'} *C*₁^{,}...^{,} *Cₙ*) scenario, assuming that data for the shard *Shardᵢ* needs to be obtained, the following SQL statement may be edited:
SELECT * FROM ${table} WHERE
(( ${C}_{0} = {V}_{0}^{s}$ AND ${C}_{1} = {V}_{1}^{s}$ ... AND ${C}_{n} > = {V}_{n}^{s}$) OR
( ${C}_{0} = {V}_{0}^{s}$ AND ${C}_{1} = {V}_{1}^{s}$ ... AND ${C}_{n - 1} > {V}_{n - 1}^{s}$) OR .... $\left.\left({C}_{0}>{V}_{0}^{s}\right)\right)$ AND (( ${C}_{0} = {V}_{0}^{e}$ AND ${C}_{1} = {V}_{1}^{e}$ ... AND ${C}_{n} < {V}_{n}^{e}$) OR
( ${C}_{0} = {V}_{0}^{e}$ AND ${C}_{1} = {V}_{1}^{e}$ ... AND ${C}_{n - 1} < {V}_{n - 1}^{e}$) OR .... $\left.\left({C}_{0}<{V}_{0}^{e}\right)\right)$

However, in the above statement, when the value of n is large, i.e., the composite index includes a large number of column fields, the MySQL executor may fail to identify such a complex SQL Where condition, which may degrade query performance to full-table scanning and reduce processing performance.

In view of this problem, the embodiments of the present disclosure provide a database-based data shard processing method and apparatus, a storage medium, and an electronic device to improve the processing performance for shards in a data table in the composite index scenario.

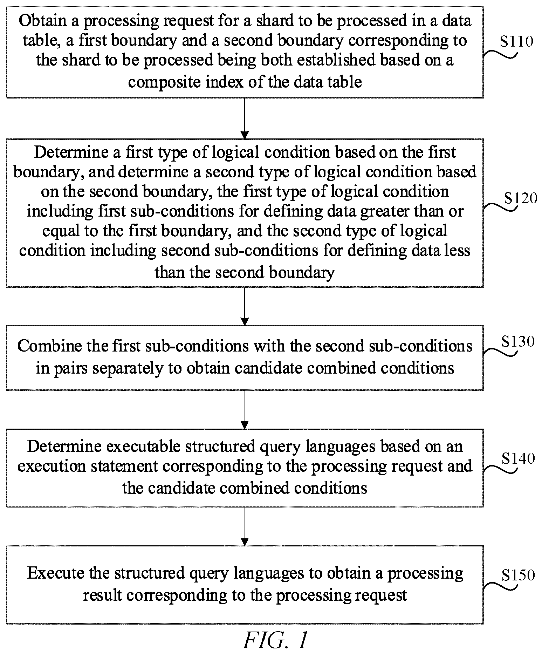

Referring to FIG. 1, FIG. 1 is a flowchart of a database-based data shard processing method according to an exemplary embodiment of the present disclosure. The database-based data shard processing method is applicable to an electronic device. Referring to FIG. 1, the database-based data shard processing method includes the following steps.

In S110, a processing request for a shard to be processed in a data table is obtained, a first boundary and a second boundary corresponding to the shard to be processed being both created based on a composite index of the data table.

In this embodiment of the present disclosure, the shard to be processed may be any one of shards in the data table stored in the database. The shards in the data table may be arbitrarily specified or automatically generated according to a sharding instruction.

The first boundary and the second boundary included in the shard are both created based on the composite index.

For example, assuming that a composite index (*C*_{0'} C₁, C₂) is created for the data table, a possible shard may be, for example, *Shardᵢ* = [(1,2,3), (1,5,4)), where (1,2,3) represents the first boundary and (1,5,4) represents the second boundary.

In this embodiment of the present disclosure, the processing request for the shard to be processed may be, for example, a query request, a delete request, or an update request.

In some implementations, a primary key of the data table may be determined based on the fields included in the composite index, i.e., a row of data may be uniquely identified based on the fields included in the composite index.

**In** S120, a first type of logical condition is determined based on the first boundary, and a second type of logical condition is determined based on the second boundary, the first type of logical condition including first sub-conditions for defining data greater than or equal to the first boundary, and the second type of logical condition including second sub-conditions for defining data less than the second boundary.

**In** this embodiment of the present disclosure, an interval where the shard to be processed is located may be defined by the first type of logical condition and the second type of logical condition. It can be understood that the interval is an interval located between the first boundary and the second boundary, i.e., an interval greater than or equal to the first boundary and less than the second boundary.

Moreover, the first boundary and the second boundary are created based on the composite index (*C*_{0'} *C*₁^{,} ... ^{,} *Cₙ*), and therefore, in order to fully express the logical conditions corresponding to the interval, i.e., in order to fully express the logical condition of being greater than or equal to the first boundary and the logical condition of being less than the second boundary, the first sub-conditions may include:
( ${C}_{0} = {V}_{0}^{s}$ AND ${C}_{1} = {V}_{1}^{s}$ ... AND ${C}_{n} > = {V}_{n}^{s}$);
( ${C}_{0} = {V}_{0}^{s}$ AND ${C}_{1} = {V}_{1}^{s}$ ... AND ${C}_{n - 1} > {V}_{n - 1}^{s}$); $\left({C}_{0}>{V}_{0}^{s}\right) .$

The second sub-conditions may include:
( ${C}_{0} = {V}_{0}^{e}$ AND ${C}_{1} = {V}_{1}^{e}$ ... AND ${C}_{n} < {V}_{n}^{e}$);
( ${C}_{0} = {V}_{0}^{e}$ AND ${C}_{1} = {V}_{1}^{e}$ ... AND ${C}_{n - 1} < {V}_{n - 1}^{e}$); $\left({C}_{0}<{V}_{0}^{e}\right) .$

In this embodiment of the present disclosure, the data greater than or equal to the first boundary may be defined from the data table by the first sub-conditions, and the data less than the second boundary may be defined from the data table by the second sub-conditions.

In S130, the first sub-conditions are combined with the second sub-conditions in pairs separately to obtain candidate combined conditions.

In this embodiment of the present disclosure, after the first sub-conditions and the second sub-conditions are obtained, the first sub-conditions and the second sub-conditions are combined in pairs separately to obtain the candidate combined conditions.

In some implementations, combining the first sub-conditions with the second sub-conditions in pairs separately to obtain the candidate combined conditions may include the following step:
combining the first sub-conditions with the second sub-conditions in pairs separately by a logical AND operation, to obtain the candidate combined conditions.

In this embodiment of the present disclosure, the logical AND may be represented by AND in the expression.

For example, assuming that the first boundary of the shard to be processed is (1,2,3), and the second boundary is (1,5,4), the obtained first sub-conditions are:
(*C*₀ = 1 AND *C*₁ = 2 AND *C*₂ >= 3)
(*C*₀ = 1 AND *C*₁ > 2); $\left({C}_{0}>1\right) .$

The obtained first sub-conditions are:
(*C*₀ = 1 AND *C*₁ = 5 AND *C*₂ < 4);
(*C*₀ = 1 AND *C*₁ < 5); $\left({C}_{0}<1\right) .$

Then the first sub-conditions are combined with the second sub-conditions in pairs separately, to obtain the candidate combined conditions as follows:
(*C*₀ = 1 AND *C*₁ = 2 AND *C*₂ >= 3) AND (*C*₀ = 1 AND *C*₁ = 5 AND *C*₂ < 4));
((*C*₀ = 1 AND *C*₁ = 2 AND *C*₂ >= 3) AND (*C*₀ = 1 AND *C*₁ < 5));
((*C*₀ = 1 AND *C*₁ = 2 AND *C*₂ >= 3) AND (*C*₀ < 1));
((*C*₀ = 1 AND *C*₁ > 2) AND (*C*₀ = 1 AND *C*₁ = 5 AND *C*₂ < 4));
((*C*₀ = 1 AND *C*₁ > 2) AND (*C*₀ = 1 AND *C*₁ < 5));
((*C*₀ = 1 AND *C*₁ > 2) AND (*C*₀ < 1));
((*C*₀ > 1) AND (*C*₀ = 1 AND *C*₁ = 5 AND *C*₂ < 4));
((*C*₀ > 1) AND (*C*₀ = 1 AND *C*₁ < 5));
((*C*₀ > 1) AND (*C*₀ < 1)).

**In** S140, executable structured query languages are determined based on an execution statement corresponding to the processing request and the candidate combined conditions.

It can be understood that the MYSQL statement may include an execution statement and logical conditions, and that different pending requests may correspond to different execution statements. For example, the query request may correspond to a query statement, e.g., SELECT * FROM ${table} WHERE. For another example, the delete request may correspond to a delete statement, e.g., DELETE * FROM ${table} WHERE. The WHERE clause may be followed by the logical conditions to define the range of execution.

In addition, the ranges defined by the candidate combined conditions may not intersect such that the constructed structured query languages cannot be executed. Therefore, in this embodiment of the present disclosure, after the candidate combined conditions and the execution statement corresponding to the pending request are obtained, the executable structured query languages may be determined based on the execution statement corresponding to the processing request and the candidate combined conditions.

In some implementations, the clause included in the execution statement may be an ORDER BY clause or the like, in addition to the WHERE clause.

In S150, the structured query languages are executed to obtain a processing result corresponding to the processing request.

In this embodiment of the present disclosure, after the executable structured query languages are obtained, the structured query languages may be executed, so that the processing result corresponding to the processing request can be obtained.

In this embodiment of the present disclosure, after first target data and second target data are determined, an expiration time corresponding to the first target data and an expiration time corresponding to the second target data may be updated according to a data expiration time update policy, and the first target data and the second target data may be further subjected to storage management based on the updated expiration times.

In some implementations, the data expiration time update policy may be a policy that increases the expiration time currently set for the first target data and that decreases the expiration time currently set for the second target data.

Accordingly, with the above method, the processing request for the shard to be processed in the data table is obtained, the first boundary and the second boundary corresponding to the shard to be processed being both created based on the composite index of the data table; the first type of logical condition is determined based on the first boundary, and the second type of logical condition is determined based on the second boundary, the first type of logical condition including the first sub-conditions for defining data greater than or equal to the first boundary, and the second type of logical condition including the second sub-conditions for defining data less than the second boundary; the first sub-conditions are combined with the second sub-conditions in pairs separately to obtain the candidate combined conditions; the executable structured query languages are determined based on the execution statement corresponding to the processing request and the candidate combined conditions; and the structured query languages are executed to obtain the processing result corresponding to the processing request. The first sub-conditions for defining data greater than or equal to the first boundary are determined based on the first boundary, and the second sub-conditions for defining data less than the second boundary are determined based on the second boundary, implementing splitting of a complex logical expression of Structured Query Language to obtain simple conditions identifiable by a MySQL executor. Since the logical expressions in the finally constructed structured query languages simply consist of the first sub-conditions and the second sub-conditions in pairs, the MySQL executor can identify the logical expressions of the constructed structured query languages, avoiding a case where the processing performance degrades to full-table scanning due to a failure of the MySQL executor in identifying the complex logical expression, thereby improving the processing performance for shards in the data table in the composite index scenario.

Based on the content described above, it can be known that the shards in the data table may be automatically generated according to a sharding instruction. Therefore, in some implementations, the database-based data shard processing method according to this embodiment of the present disclosure may further include a step of obtaining the shard to be processed in the data table, i.e., the method according to this embodiment of the present disclosure may further include the following step:
performing logical sharding on the data table based on the composite index and a preset shard size, to obtain a first boundary and a second boundary corresponding to each of shards obtained by the logical sharding, where the shard to be processed is any one of the shards obtained by the logical sharding.

**In** this embodiment of the present disclosure, the shard size $ {ShardSize} may be specified according to actual needs, and then the logical sharding may be performed on the data table based on the composite index and the preset shard size, to obtain the first boundary and the second boundary corresponding to each of the shards obtained by the logical sharding.

Performing the logical sharding on the data table based on the composite index and the preset shard size may be invoking a sharding instruction for sharding. For example, the sharding instruction may be edited as follows:
SELECT ${index} FROM $ {table} WHERE $ {index} >= ${Shard}_{i - 1}^{end}$ LIMIT ${ShardSize}
${ShardSize} is a preset size of each shard, and ${Shard}_{i - 1}^{end}$ is a right boundary of an *(i -* 1)^{th} shard, which is equal to a left boundary ${Shard}_{i}^{start}$ of an *i^{th}* shard, i.e., ${Shard}_{i}^{start} = {Shard}_{i - 1}^{end}$.

Finally, after the sharding instruction is executed, the boundaries of each shard may be output.

In some implementations, the boundaries of a shard may be represented as: ${Shard}_{i} ∈ \left[{Shard}_{i}^{start}, {Shard}_{i}^{end}\right)$

Determining the executable structured query languages based on the execution statement corresponding to the processing request and the candidate combined conditions may include the following steps:
determining executable target conditions from the candidate combined conditions; and
constructing the structured query languages corresponding to the target conditions based on the execution statement corresponding to the processing request and the target conditions.

In this embodiment of the present disclosure, the executable target conditions may be understood as candidate combined conditions where the defined ranges intersect.

After the executable target conditions are determined from the candidate combined conditions, the structured query languages corresponding to the target conditions may be constructed based on the execution statement corresponding to the processing request and the target conditions.

In some implementations, determining the executable target conditions from the candidate combined conditions may include the following steps:
determining ranges defined by index fields in the first sub-condition included in any one of the candidate combined conditions and ranges defined by index fields in the second sub-condition included in the candidate combined condition; and
determining the candidate combined condition as one of the target conditions when the ranges defined by the index fields in the first sub-condition included in the candidate combined condition all intersect with the ranges defined by the index fields in the second sub-condition included in the candidate combined condition.

Continuing with the previous example, the candidate combined conditions are assumed to be:
1. (( *C*₀ = 1 AND *C*₁ = 2 AND *C*₂ >= 3) AND (*C*₀ = 1 AND*C*₁ = 5 AND *C*₂ < 4));
2. ((*C*₀ = 1 AND *C*₁ = 2 AND *C*₂ >= 3) AND (*C*₀ = 1 AND *C*₁ < 5));
3. ((*C*₀ = 1 AND *C*₁ = 2 AND *C*₂ >= 3) AND (*C*₀ < 1));
4. ((*C*₀ = 1 AND *C*₁ > 2) AND (*C*₀ = 1 AND *C*₁ = 5 AND *C*₂ < 4));
*5.* ((*C*₀ = 1 AND *C*₁ > 2) AND (*C*₀ = 1 AND *C*₁ < 5));
6. ((*C*₀ = 1 AND *C*₁ > 2) AND (*C*₀ < 1));
7. ((*C*₀ > 1) AND (*C*₀ = 1 AND *C*₁ = 5 AND *C*₂ < 4));
8. ((*C*₀ > 1) AND (*C*₀ = 1 AND *C*₁ < 5));
9. ((*C*₀ > 1) AND (*C*₀ < 1)).

For example, in the candidate combined condition 1, *C*₁ = 2 in the first sub-condition does not intersect with *C*₁ = 5 in the second sub-condition, such that the candidate combined condition 1 cannot be executed.

For example, in the candidate combined condition 2, *C*₀ = 1 in the first sub-condition intersects with *C*₀ = 1 in the second sub-condition, *C*₁ = 2 in the first sub-condition intersects with *C*₁ < 5 in the second sub-condition, and there is no index field *C*₂ in the second sub-condition, so the index field *C*₂ is default to intersect, such that the candidate combined condition 2 can be executed.

With the same method, the executable target conditions determined from the nine candidate combined conditions described above are:
2. ((*C*₀ = 1 AND *C*₁ = 2 AND *C*₂ >= 3) AND (*C*₀ = 1 AND *C*₁ < 5));
4. ((*C*₀ = 1 AND *C*₁ > 2) AND (*C*₀ = 1 AND *C*₁ = 5 AND *C*₂ < 4));
*5.* ((*C*₀ = 1 AND *C*₁ > 2) AND (*C*₀ = 1 AND *C*₁ < 5)).

In this case, when the processing request is the query request, for example, the executable structured query languages may be determined as:
SELECT * FROM ${table} WHERE ((*C*₀ = 1 AND *C*₁ = 2 AND *C*₂ >= 3) AND (*C*₀ = 1 AND *C*₁ < 5));
SELECT * FROM ${table} WHERE ((*C*₀ = 1 AND *C*₁ > 2) AND (*C*₀ = 1 AND *C*₁ = 5 AND *C*₂ < 4));
SELECT * FROM ${table} WHERE ((*C*₀ = 1 AND *C*₁ > 2) AND (*C*₀ = 1 AND *C*₁ < 5)).

In addition, considering that the above logical expressions may still be inconvenient to identify, the above expressions may be further simplified. Therefore, in some implementations, after the ranges defined by the index fields in the first sub-condition included in any one of the candidate combined conditions and the ranges defined by the index fields in the second sub-condition included in the candidate combined condition are determined, the method according to this embodiment of the present disclosure may further include the following step:
merging, based on a logical operation relationship when the ranges defined by the index fields in the first sub-condition included in the candidate combined condition all intersect with the ranges defined by the index fields in the second sub-condition included in the candidate combined condition, the first sub-condition and the second sub-condition that are included in the candidate combined condition, and determining a target condition based on the merged condition.

In this embodiment of the present disclosure, the determined executable target conditions may be simplified based on the logical operation relationship.

For example, continuing with the previous example, the determined executable target conditions are the three conditions as follows:
2. ((*C*₀ = 1 AND *C*₁ = 2 AND *C*₂ >= 3) AND (*C*₀ = 1 AND *C*₁ < 5));
4. ((*C*₀ = 1 AND *C*₁ > 2) AND (*C*₀ = 1 AND *C*₁ = 5 AND *C*₂ < 4));
*5.* ((*C*₀ = 1 AND *C*₁ > 2) AND (*C*₀ = 1 AND *C*₁ < 5)).

The candidate combined condition 2 may be simplified to obtain *C*₀ = 1 AND *C*₁ = 2 AND *C*₂ >= 3.

The candidate combined condition 4 may be simplified to obtain *C*₀ = 1 AND *C*₁ > 2 AND *C*₁ < 5.

The candidate combined condition 5 may be simplified to obtain *C*₀ = 1 AND *C*₁ = 5 AND *C*₂ < 4.

In this case, when the processing request is still the query request, for example, the executable structured query languages may be determined as:
SELECT * FROM $ {table} WHERE *C*₀ = 1 AND *C*₁ = 2 AND *C*₂ >= 3;
SELECT * FROM $ {table} WHERE *C*₀ = 1 AND *C*₁ > 2 AND *C*₁ < 5;
SELECT * FROM $ {table} WHERE *C*₀ = 1 AND *C*₁ = 5 AND *C*₂ < 4.

Based on the content described above, it can be known that the processing request may be the query request, the delete request, etc. Therefore, in some implementations, when the processing request is the query request, executing the structured query languages to obtain the processing result corresponding to the processing request may include the following step:
determining, based on a union set of execution results of the structured query languages, a query result corresponding to the processing request.

In this embodiment of the present disclosure, when the processing request is the query request, the structured query languages may be separately executed to obtain corresponding query results, and then a union set of the query results is determined as a complete query result corresponding to the processing request.

In some implementations, when the processing request is the delete request, executing the structured query languages to obtain the processing result corresponding to the processing request may include the following step:
executing the structured query languages in sequence to obtain a query result corresponding to the processing request.

In this embodiment of the present disclosure, when the processing request is the delete request, the structured query languages may be executed in sequence, and after the structured query languages are all executed, a complete delete result corresponding to the processing request can be obtained.

Hereinafter, the database-based data shard processing method according to this embodiment of the present disclosure is described in detail with reference to a complete example.

When data migration of a MySQL table is required or data verification of a MySQL table is required, in order to increase a migration speed or a verification speed, logical sharding may be performed on the table based on a composite index, and the migration speed is further increased by multi-shard concurrent migration, or the verification speed is further increased by multi-shard concurrent comparison. With this requirement, the following steps are performed.

First, a shard size $ {ShardSize} of a desired shard is specified.

Next, a sharding instruction SELECT ${index} FROM ${table} WHERE ${index} *>=* ${Shard}_{i - 1}^{end}$ LIMIT ${ShardSize} is edited, and the sharding instruction is executed to automatically obtain boundaries, including a first boundary and a second boundary, corresponding to each of shards.

Then, for any one of the shards, a first type of logical condition is determined based on the first boundary corresponding to the shard, and a second type of logical condition is determined based on the second boundary corresponding to the shard.

Next, first sub-conditions included in the first type of logical condition are combined with second sub-conditions included in the second type of logical condition of the shard in pairs separately to obtain candidate combined conditions.

Then, ranges defined by index fields in the first sub-condition included in any one of the candidate combined conditions and ranges defined by index fields in the second sub-condition included in the candidate combined condition are determined; and when the ranges defined by the index fields in the first sub-condition all intersect with the ranges defined by the index fields in the second sub-condition, the first sub-condition and the second sub-condition that are included in the candidate combined condition are merged based on a logical operation relationship, and a target condition is determined based on the merged condition. With the same method, the target conditions of the shard can be determined.

According to the above requirements, it can be known that data of each of the shards needs to be obtained. Therefore, if the processing request for each of the shards is a query request, a SELECT clause is used as an execution statement.

Then, structured query languages corresponding to the target conditions of the shard may be constructed based on the SELECT clause and the target conditions, so as to obtain the structured query languages corresponding to the shard.

Finally, the structured query languages corresponding to the shard are executed, and a union set of execution results of the structured query languages corresponding to the shard is used as the obtained sharded data of the shard.

With the same method, the sharded data of each of the shards can be determined, such that the obtained sharded data may be used for multi-shard concurrent migration or multi-shard concurrent comparison.

Through extensive experiments, it is proved that MySQL can perform index query as expected for each of the determined executable structured query languages, ensuring that the data in the MySQL table is accurately sharded based on the specified $ {ShardSize} while ensuring that the generated query SQLs do not suffer from performance degradation.

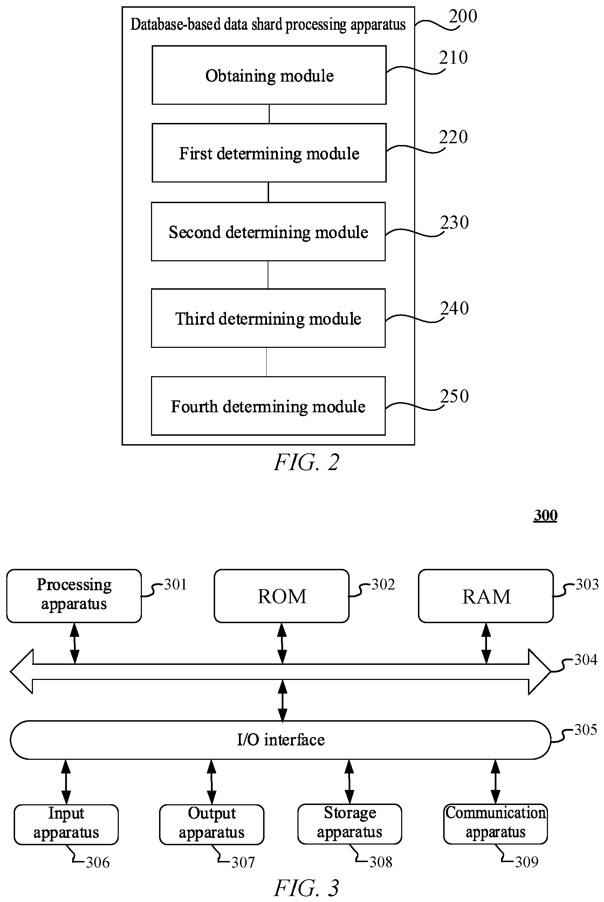

FIG. 2 is a block diagram of a database-based data shard processing apparatus according to an exemplary embodiment of the present disclosure. With reference to FIG. 2, the database-based data shard processing apparatus 200 includes:
an obtaining module 210 configured to obtain a processing request for a shard to be processed in a data table, a first boundary and a second boundary corresponding to the shard to be processed being both created based on a composite index of the data table;
a first determining module 220 configured to determine a first type of logical condition based on the first boundary, and determine a second type of logical condition based on the second boundary, the first type of logical condition including first sub-conditions for defining data greater than or equal to the first boundary, and the second type of logical condition including second sub-conditions for defining data less than the second boundary;
a second determining module 230 configured to combine the first sub-conditions with the second sub-conditions in pairs separately to obtain candidate combined conditions;
a third determining module 240 configured to determine executable structured query languages based on an execution statement corresponding to the processing request and the candidate combined conditions; and
a fourth determining module 250 configured to execute the structured query languages to obtain a processing result corresponding to the processing request.

Optionally, the apparatus 200 further includes:
a sharding module configured to perform logical sharding on the data table based on the composite index and a preset shard size, to obtain a first boundary and a second boundary corresponding to each of shards obtained by the logical sharding, where the shard to be processed is any one of the shards obtained by the logical sharding.

The third determining module 240 includes:
a first determining sub-module configured to determine executable target conditions from the candidate combined conditions; and
a construction sub-module configured to construct, based on the execution statement corresponding to the processing request and the target conditions, the structured query languages corresponding to the target conditions.

Optionally, the first determining sub-module includes:
a first determining unit configured to determine ranges defined by index fields in the first sub-condition included in any one of the candidate combined conditions and ranges defined by index fields in the second sub-condition included in the candidate combined condition;
a second determining unit configured to determine the candidate combined condition as one of the target conditions when the ranges defined by the index fields in the first sub-condition included in the candidate combined condition all intersect with the ranges defined by the index fields in the second sub-condition included in the candidate combined condition.

Optionally, the apparatus 200 further includes:
a fifth determining module configured to merge, based on a logical operation relationship when the ranges defined by the index fields in the first sub-condition included in the candidate combined condition all intersect with the ranges defined by the index fields in the second sub-condition included in the candidate combined condition, the first sub-condition and the second sub-condition that are included in the candidate combined condition, and determine a target condition based on the merged condition.

Optionally, the processing request is a query request, and the fourth determining module 250 includes:
a second determining sub-module configured to determine, based on a union set of execution results of the structured query languages, a query result corresponding to the processing request.

Optionally, the second determining module 250 includes:
a third determining sub-module configured to combine the first sub-conditions with the second sub-conditions in pairs separately by a logical AND operation, to obtain the candidate combined conditions.

Reference is made to FIG. 3 below, which is a schematic diagram of a structure of an electronic device 300 suitable for implementing the embodiments of the present disclosure. The electronic device shown in FIG. 3 is merely an example, and shall not impose any limitation on the function and scope of use of the embodiments of the present disclosure.

As shown in FIG. 3, the electronic device 300 may include a processing apparatus (e.g., a central processor, a graphics processor) 301 that may perform a variety of appropriate actions and processing in accordance with a program stored in a read-only memory (ROM) 302 or a program loaded from a storage apparatus 308 into a random-access memory (RAM) 303. The RAM 303 further stores various programs and data required for the operation of the electronic device 300. The processing apparatus 301, the ROM 302, and the RAM 303 are connected to each other through a bus 304. An input/output (I/O) interface 305 is also connected to the bus 304.

Generally, the following apparatuses may be connected to the I/O interface 305: an input apparatus 306 including, for example, a touch screen, a touchpad, a keyboard, a mouse, a camera, a microphone, an accelerometer, and a gyroscope; an output apparatus 307 including, for example, a liquid crystal display (LCD), a speaker, and a vibrator; a storage apparatus 308 including, for example, a tape, and a hard disk; and a communication apparatus 309. The communication apparatus 309 may allow the electronic device 300 to perform wireless or wired communication with other devices to exchange data. Although FIG. 3 shows the electronic device 300 having various apparatuses, it should be understood that it is not required to implement or have all of the shown apparatuses. It may be an altemative to implement or have more or fewer apparatuses.

In particular, according to an embodiment of the present disclosure, the process described above with reference to the flowchart may be implemented as a computer software program. For example, this embodiment of the present disclosure includes a computer program product, which includes a computer program carried on a non-transitory computer-readable medium, where the computer program includes program code for performing the method shown in the flowchart. In such an embodiment, the computer program may be downloaded and installed from a network through the communication apparatus 309, or installed from the storage apparatus 308, or installed from the ROM 302. When the computer program is executed by the processing apparatus 301, the above-mentioned functions defined in the method according to the embodiments of the present disclosure are performed.

It should be noted that the above computer-readable medium described in the present disclosure may be a computer-readable signal medium, or a computer-readable storage medium, or any combination thereof. The computer-readable storage medium may be, for example, but is not limited to, an electric, magnetic, optical, electromagnetic, infrared, or semi-conductive system, apparatus, or device, or any combination thereof. More specific examples of the computer-readable storage medium may include, but are not limited to: an electrical connection having one or more wires, a portable computer magnetic disk, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination thereof. In the present disclosure, the computer-readable storage medium may be any tangible medium containing or storing a program which may be used by or in combination with an instruction execution system, apparatus, or device. **In** the present disclosure, the computer-readable signal medium may include a data signal propagated in a baseband or as a part of a carrier, the data signal carrying computer-readable program code. A data signal propagated in such a way may assume a plurality of forms, including, but not limited to, an electromagnetic signal, an optical signal, or any suitable combination thereof. The computer-readable signal medium may also be any computer-readable medium other than the computer-readable storage medium. The computer-readable signal medium can send, propagate, or transmit a program for use by or in combination with an instruction execution system, apparatus, or device. The program code contained in the computer-readable medium may be transmitted over any suitable medium, including, but not limited to: electric wires, optical cables, radio frequency (RF), etc., or any suitable combination thereof.

In some implementations, the electronic device may communicate using any currently known or future-developed network protocol such as a Hypertext Transfer Protocol (HTTP), and may be connected to digital data communication (for example, communication network) in any form or medium. Examples of the communication network include a local area network ("LAN"), a wide area network ("WAN"), an internetwork (for example, the Internet), a peer-to-peer network (for example, an ad hoc peer-to-peer network), and any currently known or future-developed network.

The above computer-readable medium may be contained in the above electronic device. Alternatively, the computer-readable medium may exist independently, without being assembled into the electronic device.

The above computer-readable medium carries one or more programs which, when executed by the electronic device, cause the electronic device to perform the following: obtaining a processing request for a shard to be processed in a data table, a first boundary and a second boundary corresponding to the shard to be processed being both created based on a composite index of the data table; determining a first type of logical condition based on the first boundary, and determining a second type of logical condition based on the second boundary, the first type of logical condition including first sub-conditions for defining data greater than or equal to the first boundary, and the second type of logical condition including second sub-conditions for defining data less than the second boundary; combining the first sub-conditions with the second sub-conditions in pairs separately to obtain candidate combined conditions; determining executable structured query languages based on an execution statement corresponding to the processing request and the candidate combined conditions; and executing the structured query languages to obtain a processing result corresponding to the processing request.

The computer program code for performing the operations of the present disclosure may be written in one or more programming languages or a combination thereof, where the programming languages include, but are not limited to, an object-oriented programming language, such as Java, Smalltalk, and C++, and further include conventional procedural programming languages, such as "C" language or similar programming languages. The program code may be completely executed on a computer of a user, partially executed on a computer of a user, executed as an independent software package, partially executed on a computer of a user and partially executed on a remote computer, or completely executed on a remote computer or server. In the case of the remote computer, the remote computer may be connected to the computer of the user via any kind of network, including a local area network (LAN) or a wide area network (WAN), or may be connected to an external computer (for example, connected via the Internet with the aid of an Intemet service provider).

The flowchart and the block diagram in the accompanying drawings illustrate the possibly implemented architecture, functions, and operations of the system, method, and computer program product according to the embodiments of the present disclosure. In this regard, each block in the flowchart or the block diagram may represent a module, program segment, or part of code, and the module, program segment, or part of code contains one or more executable instructions for implementing the specified logical functions. It should also be noted that, in some altemative implementations, the functions marked in the blocks may also occur in an order different from that marked in the accompanying drawings. For example, two blocks shown in succession can actually be performed substantially in parallel, or they can sometimes be performed in the reverse order, depending on the functions involved. It should also be noted that each block in the block diagram and/or the flowchart, and a combination of the blocks in the block diagram and/or the flowchart may be implemented by a dedicated hardware-based system that executes specified functions or operations, or may be implemented by a combination of dedicated hardware and computer instructions.

The modules described in the embodiments of the present disclosure may be implemented by means of software, or may be implemented by means of hardware. The names of the modules do not constitute a limitation on the modules themselves in some cases.

The above functions described herein may be performed at least partially by one or more hardware logic components. For example, without limitation, exemplary types of hardware logic components that may be used include: a field programmable gate array (FPGA), an application-specific integrated circuit (ASIC), an application-specific standard product (ASSP), a system-on-chip (SOC) system, a complex programmable logic device (CPLD), and the like.

In the context of the present disclosure, a machine-readable medium may be a tangible medium that may contain or store a program for use by or in combination with an instruction execution system, apparatus, or device. The machine-readable medium may be a machine-readable signal medium or a machine-readable storage medium. The machine-readable medium may include, but is not limited to, electronic, magnetic, optical, electromagnetic, infrared, or semiconductor systems, apparatuses, or devices, or any suitable combination thereof. More specific examples of the machine-readable storage medium may include an electrical connection based on one or more wires, a portable computer disk, a hard disk, a random access memory (RAM), a read-only memory (ROM), an erasable programmable read-only memory (EPROM or flash memory), an optic fiber, a portable compact disk read-only memory (CD-ROM), an optical storage device, a magnetic storage device, or any suitable combination thereof.

In addition, although the various operations are depicted in a specific order, it should not be construed as requiring these operations to be performed in the specific order shown or in a sequential order. Under certain circumstances, multitasking and parallel processing may be advantageous. Similarly, although several specific implementation details are included in the foregoing discussions, these details should not be construed as limiting the scope of the present disclosure. Some features that are described in the context of separate embodiments can also be implemented in combination in a single embodiment. In contrast, various features described in the context of a single embodiment may alternatively be implemented in a plurality of embodiments individually or in any suitable sub-combination.

## Claims

1. A database-based data shard processing method, comprising:
obtaining a processing request for a shard to be processed in a data table, a first boundary and a second boundary corresponding to the shard to be processed being both created based on a composite index of the data table, wherein the composite index is an index consisting of two or more columns;
determining a first type of logical condition based on the first boundary, and determining a second type of logical condition based on the second boundary, the first type of logical condition comprising first sub-conditions for defining data greater than or equal to the first boundary, and the second type of logical condition comprising second sub-conditions for defining data less than the second boundary;
combining the first sub-conditions with the second sub-conditions in pairs separately to obtain candidate combined conditions;
determining executable structured query languages based on an execution statement corresponding to the processing request and the candidate combined conditions; and
executing the structured query languages to obtain a processing result corresponding to the processing request;
wherein the determining executable structured query languages based on an execution statement corresponding to the processing request and the candidate combined conditions comprises:
determining executable target conditions from the candidate combined conditions; and
constructing the structured query languages corresponding to the target conditions based on the execution statement corresponding to the processing request and the target conditions.

2. The method according to claim 1, **characterized by** further comprising:
performing logical sharding on the data table based on the composite index and a preset shard size, to obtain a first boundary and a second boundary corresponding to each of shards obtained by the logical sharding, wherein the shard to be processed is any one of the shards obtained by the logical sharding.

3. The method according to claim 2, **characterized in that** the determining executable target conditions from the candidate combined conditions comprises:
determining ranges defined by index fields in the first sub-condition comprised in any one of the candidate combined conditions and ranges defined by index fields in the second sub-condition comprised in the candidate combined condition; and
determining the candidate combined condition as one of the target conditions when the ranges defined by the index fields in the first sub-condition comprised in the candidate combined condition all intersect with the ranges defined by the index fields in the second sub-condition comprised in the candidate combined condition.

4. The method according to claim 3, **characterized by** further comprising:
merging, based on a logical operation relationship when the ranges defined by the index fields in the first sub-condition comprised in the candidate combined condition all intersect with the ranges defined by the index fields in the second sub-condition comprised in the candidate combined condition, the first sub-condition and the second sub-condition that are comprised in the candidate combined condition, and determining one target condition based on the merged condition.

5. The method according to any one of claims 1 to 4, **characterized in that** the processing request is a query request, and the executing the structured query languages to obtain a processing result corresponding to the processing request comprises:
determining, based on a union set of execution results of the structured query languages, a query result corresponding to the processing request.

6. The method according to any one of claims 1 to 5, **characterized in that** the combining the first sub-conditions with the second sub-conditions in pairs separately to obtain candidate combined conditions comprises:
combining the first sub-conditions with the second sub-conditions in pairs separately by a logical AND operation, to obtain the candidate combined conditions.

7. A database-based data shard processing apparatus (200), comprising:
an obtaining module (210) configured to obtain a processing request for a shard to be processed in a data table, a first boundary and a second boundary corresponding to the shard to be processed being both created based on a composite index of the data table, wherein the composite index is an index consisting of two or more columns;
a first determining module (220) configured to determine a first type of logical condition based on the first boundary, and determine a second type of logical condition based on the second boundary, the first type of logical condition comprising first sub-conditions for defining data greater than or equal to the first boundary, and the second type of logical condition comprising second sub-conditions for defining data less than the second boundary;
a fourth determining module (250) configured to execute structured query languages to obtain a processing result corresponding to the processing request;
**characterized in that**, the database-based data shard processing apparatus (200) further comprises:
a second determining module (230) configured to combine the first sub-conditions with the second sub-conditions in pairs separately to obtain candidate combined conditions;
a third determining module (240) configured to determine executable structured query languages based on an execution statement corresponding to the processing request and the candidate combined conditions;
wherein the third determining module (240) comprises:
a first determining sub-module configured to determine executable target conditions from the candidate combined conditions; and
a construction sub-module configured to construct, based on the execution statement corresponding to the processing request and the target conditions, the structured query languages corresponding to the target conditions.

8. A computer-readable medium having a computer program stored thereon, **characterized in that** when the program is executed by a processing apparatus, the steps of the method according to any one of claims 1 to 6 are implemented.

## Patentansprüche

1. Datenbankbasiertes Verfahren zur Verarbeitung von Daten-Shards, umfassend:
Erhalten einer Verarbeitungsanforderung für einen zu verarbeitenden Shard in einer Datentabelle, wobei eine erste Grenze und eine zweite Grenze, die dem zu verarbeitenden Shard entsprechen, beide auf der Grundlage eines zusammengesetzten Index der Datentabelle erzeugt werden, wobei der zusammengesetzte Index ein Index ist, der aus zwei oder mehr Spalten besteht;
Bestimmen eines ersten Typs von logischen Bedingungen auf der Grundlage der ersten Grenze und Bestimmen eines zweiten Typs von logischen Bedingungen auf der Grundlage der zweiten Grenze, wobei der erste Typ von logischer Bedingung erste Teilbedingungen zum Definieren von Daten umfasst, die größer oder gleich der ersten Grenze sind, und der zweite Typ von logischer Bedingung zweite Teilbedingungen zum Definieren von Daten umfasst, die kleiner als die zweite Grenze sind;
paarweises separates Kombinieren der ersten Teilbedingungen mit den zweiten Teilbedingungen, um Kandidaten für kombinierte Bedingungen zu erhalten;
Bestimmen ausführbarer strukturierter Abfragesprachen auf der Grundlage einer Ausführungsanweisung, die der Verarbeitungsanforderung entspricht, und der Kandidaten für kombinierte Bedingungen; und
Ausführen der strukturierten Abfragesprachen, um ein Verarbeitungsergebnis zu erhalten, das der Verarbeitungsanforderung entspricht;
wobei das Bestimmen ausführbarer strukturierter Abfragesprachen auf der Grundlage einer Ausführungsanweisung, die der Verarbeitungsanforderung entspricht, und der Kandidaten für kombinierte Bedingungen umfasst:
Bestimmen ausführbarer Zielbedingungen aus den Kandidaten für kombinierte Bedingungen; und
Konstruieren der strukturierten Abfragesprachen, die den Zielbedingungen entsprechen, auf der Grundlage der Ausführungsanweisung, die der Verarbeitungsanforderung entspricht, und der Zielbedingungen.

2. Verfahren nach Anspruch 1, **dadurch gekennzeichnet, dass** es ferner umfasst:
Durchführen einer logischen Sharding-Operation, auch logische horizontale Fragmentierung genannt, auf der Datentabelle auf der Grundlage des zusammengesetzten Index und einer voreingestellten Shard-Größe, um eine erste Grenze und eine zweite Grenze zu erhalten, die jedem von durch die logische Sharding-Operation erhaltenen Shards entsprechen, wobei der zu verarbeitende Shard ein beliebiger der durch die logische Sharding-Operation erhaltenen Shards ist.

3. Verfahren nach Anspruch 2, **dadurch gekennzeichnet, dass** das Bestimmen ausführbarer Zielbedingungen aus den Kandidaten für kombinierte Bedingungen umfasst:
Bestimmen von Bereichen, die durch Indexfelder in der ersten Teilbedingung definiert sind, die in einem der Kandidaten für kombinierte Bedingungen enthalten ist, sowie von Bereichen, die durch Indexfelder in der zweiten Teilbedingung definiert sind, die in dem Kandidaten für kombinierte Bedingungen enthalten ist; und
Bestimmen des Kandidaten für kombinierte Bedingungen als eine der Zielbedingungen, wenn die Bereiche, die durch die Indexfelder in der ersten Teilbedingung definiert sind, die in dem Kandidaten für kombinierte Bedingungen enthalten ist, sich alle mit den Bereichen überschneiden, die durch die Indexfelder in der zweiten Teilbedingung definiert sind, die in dem Kandidaten für kombinierte Bedingungen enthalten ist.

4. Verfahren nach Anspruch 3, **dadurch gekennzeichnet, dass** es ferner umfasst:
Zusammenführen, auf der Grundlage einer logischen Operationsbeziehung, wenn die Bereiche, die durch die Indexfelder in der ersten Teilbedingung definiert sind, die in dem Kandidaten für kombinierte Bedingungen umfasst ist, sich alle mit den Bereichen überschneiden, die durch die Indexfelder in der zweiten Teilbedingung definiert sind, die in dem Kandidaten für kombinierte Bedingungen umfasst ist, der ersten Teilbedingung und der zweiten Teilbedingung, die in dem Kandidaten für kombinierte Bedingungen umfasst sind, und Bestimmen einer Zielbedingung auf der Grundlage der zusammengeführten Bedingung.

5. Verfahren nach einem der Ansprüche 1 bis 4, **dadurch gekennzeichnet, dass** die Verarbeitungsanforderung eine Abfrageanforderung ist und das Ausführen der strukturierten Abfragesprachen, um ein Verarbeitungsergebnis zu erhalten, das der Verarbeitungsanforderung entspricht, umfasst:
Bestimmen, auf der Grundlage einer Vereinigungsmenge von Ausführungsergebnissen der strukturierten Abfragesprachen, eines Abfrageergebnisses, das der Verarbeitungsanforderung entspricht.

6. Verfahren nach einem der Ansprüche 1 bis 5, **dadurch gekennzeichnet, dass** das paarweise separate Kombinieren der ersten Teilbedingungen mit den zweiten Teilbedingungen, um Kandidaten für kombinierte Bedingungen zu erhalten, umfasst:
paarweises separates Kombinieren der ersten Teilbedingungen mit den zweiten Teilbedingungen durch eine logische UND-Operation, um die Kandidaten für kombinierte Bedingungen zu erhalten.

7. Datenbankbasierte Einrichtung zur Verarbeitung von Daten-Shards (200), umfassend:
ein Erhaltungsmodul (210), das dafür konfiguriert ist, eine Verarbeitungsanforderung für einen in einer Datentabelle zu verarbeitenden Shard zu erhalten, wobei eine erste Grenze und eine zweite Grenze, die dem zu verarbeitenden Shard entsprechen, beide auf der Grundlage eines zusammengesetzten Index der Datentabelle erzeugt werden, wobei der zusammengesetzte Index ein Index ist, der aus zwei oder mehr Spalten besteht;
ein erstes Bestimmungsmodul (220), das dafür konfiguriert ist, einen ersten Typ von logischer Bedingung auf der Grundlage der ersten Grenze zu bestimmen und einen zweiten Typ von logischer Bedingung auf der Grundlage der zweiten Grenze zu bestimmen, wobei der erste Typ von logischer Bedingung erste Teilbedingungen zum Definieren von Daten umfasst, die größer oder gleich der ersten Grenze sind, und der zweite Typ von logischer Bedingung zweite Teilbedingungen zum Definieren von Daten umfasst, die kleiner als die zweite Grenze sind;
ein viertes Bestimmungsmodul (250), das dafür konfiguriert ist, strukturierte Abfragesprachen auszuführen, um ein Verarbeitungsergebnis zu erhalten, das der Verarbeitungsanforderung entspricht;
**dadurch gekennzeichnet, dass** die datenbankbasierte Einrichtung zur Verarbeitung von Daten-Shards (200) ferner umfasst:
ein zweites Bestimmungsmodul (230), das dafür konfiguriert ist, die ersten Teilbedingungen mit den zweiten Teilbedingungen paarweise separat zu kombinieren, um Kandidaten für kombinierte Bedingungen zu erhalten;
ein drittes Bestimmungsmodul (240), das dafür konfiguriert ist, ausführbare strukturierte Abfragesprachen auf der Grundlage einer Ausführungsanweisung, die der Verarbeitungsanforderung entspricht, und der Kandidaten für kombinierte Bedingungen zu bestimmen;
wobei das dritte Bestimmungsmodul (240) umfasst:
ein erstes Bestimmungsteilmodul, das dafür konfiguriert ist, aus den Kandidaten für kombinierte Bedingungen ausführbare Zielbedingungen zu bestimmen; und
ein Konstruktionsteilmodul, das dafür konfiguriert ist, auf der Grundlage der Ausführungsanweisung, die der Verarbeitungsanforderung entspricht, und der Zielbedingungen die strukturierten Abfragesprachen zu konstruieren, die den Zielbedingungen entsprechen.

8. Computerlesbares Medium, das ein darauf gespeichertes Computerprogramm aufweist, **dadurch gekennzeichnet, dass**, wenn das Programms durch eine Verarbeitungseinrichtung ausgeführt wird, die Schritte des Verfahrens nach einem der Ansprüche 1 bis 6 implementiert werden.

## Revendications

1. Procédé de traitement de fragments de données basé sur une base de données, comprenant :
l'obtention d'une demande de traitement pour un fragment à traiter dans une table de données, une première limite et une seconde limite correspondant au fragment à traiter étant toutes deux créées sur la base d'un index composite de la table de données, dans lequel l'index composite est un index consistant en deux colonnes ou plus ;
la détermination d'un premier type de condition logique basé sur la première limite, et la détermination d'un second type de condition logique basé sur la seconde limite, le premier type de condition logique comprenant des premières sous-conditions pour définir des données supérieures ou égales à la première limite, et le second type de condition logique comprenant des secondes sous-conditions pour définir des données inférieures à la seconde limite ;
la combinaison indépendante des premières sous-conditions et des secondes sous-conditions par paires pour obtenir des conditions combinées candidates ;
la détermination de langages d'interrogation structurés exécutables en fonction d'une instruction d'exécution correspondant à la demande de traitement et aux conditions combinées candidates ; et
l'exécution des langages d'interrogation structurés pour obtenir un résultat de traitement correspondant à la demande de traitement ;
dans lequel la détermination des langages d'interrogation structurés exécutables, basée sur une instruction d'exécution correspondant à la demande de traitement et aux conditions combinées candidates, comprend :
la détermination de conditions cibles exécutables à partir des conditions combinées candidates ; et
la construction des langages d'interrogation structurés correspondant aux conditions cibles, en fonction de l'instruction d'exécution correspondant à la demande de traitement et aux conditions cibles.

2. Procédé selon la revendication 1, **caractérisé en ce qu'**il comprend en outre :
l'exécution d'une fragmentation logique sur la table de données en fonction de l'index composite et d'une taille de fragment prédéfinie, afin d'obtenir une première limite et une seconde limite correspondant à chacun des fragments obtenus par la fragmentation logique, dans lequel le fragment à traiter est l'un quelconque des fragments obtenus par la fragmentation logique.

3. Procédé selon la revendication 2, **caractérisé en ce que** la détermination des conditions cibles exécutables à partir des conditions combinées candidates comprend :
la détermination de plages définies par des champs d'index dans la première sous-condition comprise dans l'une quelconque des conditions combinées candidates et de plages définies par des champs d'index dans la seconde sous-condition comprise dans la condition combinée candidate ; et
la détermination de la condition combinée candidate comme étant l'une des conditions cibles lorsque les plages définies par les champs d'index dans la première sous-condition comprise dans la condition combinée candidate se recoupent toutes avec les plages définies par les champs d'index dans la seconde sous-condition comprise dans la condition combinée candidate.

4. Procédé selon la revendication 3, **caractérisé en ce qu'**il comprend en outre :
la fusion, basée sur une relation d'opération logique lorsque les plages définies par les champs d'index dans la première sous-condition comprise dans la condition combinée candidate se recoupent toutes avec les plages définies par les champs d'index dans la seconde sous-condition comprise dans la condition combinée candidate, de la première sous-condition et de la seconde sous-condition qui sont comprises dans la condition combinée candidate, et la détermination d'une condition cible basée sur la condition fusionnée.

5. Procédé selon l'une quelconque des revendications 1 à 4, **caractérisé en ce que** la demande de traitement est une demande d'interrogation, et l'exécution des langages d'interrogation structurés pour obtenir un résultat de traitement correspondant à la demande de traitement comprend :
la détermination, sur la base d'un ensemble commun de résultats d'exécution des langages d'interrogation structurés, d'un résultat d'interrogation correspondant à la demande de traitement.

6. Procédé selon l'une quelconque des revendications 1 à 5, **caractérisé en ce que** la combinaison indépendante des premières sous-conditions et des secondes sous-conditions par paires, pour obtenir des conditions combinées candidates, comprend :
la combinaison indépendante des premières sous-conditions et des secondes sous-conditions par paires à l'aide d'une opération logique ET, afin d'obtenir les conditions combinées candidates.

7. Appareil de traitement de fragments de données basé sur une base de données (200), comprenant :
un module d'obtention (210) configuré pour obtenir une demande de traitement pour un fragment à traiter dans une table de données, une première limite et une seconde limite correspondant au fragment à traiter étant toutes deux créées sur la base d'un index composite de la table de données, dans lequel l'index composite est un index consistant en deux colonnes ou plus ;
un premier module de détermination (220) configuré pour déterminer un premier type de condition logique basé sur la première limite, et déterminer un second type de condition logique basé sur la seconde limite, le premier type de condition logique comprenant des premières sous-conditions pour définir des données supérieures ou égales à la première limite, et le second type de condition logique comprenant des secondes sous-conditions pour définir des données inférieures à la seconde limite ;
un quatrième module de détermination (250) configuré pour exécuter des langages d'interrogation structurés afin d'obtenir un résultat de traitement correspondant à la demande de traitement ;
**caractérisé en ce que** l'appareil de traitement de fragments de données basé sur une base de données (200) comprend en outre :
un deuxième module de détermination (230) configuré pour combiner indépendamment les premières sous-conditions et les secondes sous-conditions par paires afin d'obtenir des conditions combinées candidates ;
un troisième module de détermination (240) configuré pour déterminer les langages d'interrogation structurés exécutables sur la base d'une instruction d'exécution correspondant à la demande de traitement et aux conditions combinées candidates ;
dans lequel le troisième module de détermination (240) comprend :
un premier sous-module de détermination configuré pour déterminer les conditions cibles exécutables à partir des conditions combinées candidates ; et
un sous-module de construction configuré pour construire, sur la base de l'instruction d'exécution correspondant à la demande de traitement et aux conditions cibles, les langages d'interrogation structurés correspondant aux conditions cibles.

8. Support lisible par ordinateur présentant un programme informatique stocké sur celui-ci, **caractérisé en ce que**, lorsque le programme informatique est exécuté par un appareil de traitement, les étapes du procédé selon l'une quelconque des revendications 1 à 6 sont mises en œuvre.
